# EUROPEAN PATENT SPECIFICATION

(11) **EP 1 468 604 B1**
(45) Date of publication and mention of the grant of the patent: **11.02.2009**
(21) Application number: 04008725.6
(22) Date of filing: 13.04.2004
(51) Int. Cl.: A01M 7/00

(54) **Spray boom with telescopic arms**
Spritzgestänge mit teleskopischem Ausleger
Rampe de pulvérisation à bras téléscopique

(30) Priority: 14.04.2003 IT BO20030220
(43) Date of publication of application: 20.10.2004
(73) Proprietor: Bargam S.p.A., 40026 Imola (IT)
(72) Inventor: Armaroli, Aureliano, 40129 Bologna (IT); Gambetti, Ermenegildo, 40026 Imola (IT)
(74) Representative: Porsia, Dino

(56) References cited:
- WO-A-00/42840
- DE-A- 4 013 992
- FR-A- 2 541 912
- GB-A- 557 068
- US-A- 4 203 226

## Description

The present invention relates to booms used in agriculture for spraying plant protection products or herbicides on crops with developed foliage or on bare or sparsely vegetated soil. In all cases, this equipment consists of latticed arms, articulated or jointed to form a train, with calliper systems and means which, during operation, align these arms with each other, parallel to the ground and transversely with respect to the direction of travel of the vehicle supporting and transporting them, and which draw in the said arms to the sides or the rear of the said means of transport when the equipment is at rest or when it is to be transferred. Pipes are positioned longitudinally on the said arms and carry the equidistant nozzles which spray the active principle towards the soil, the said pipes being connected for this purpose to means for the forced supply of the active principle which is contained in a drum located in the middle of the assembly.

Equipment designed in this way is of considerable weight, is expensive to construct, and is subject to considerable torsional moments during the extension or reduction of the overall dimensions, when certain sections of an arm are positioned perpendicularly to others. When the various arms are in the rest position, their overall dimensions are added to each other, creating a system with significant overall dimensions in plan view, which causes problems in the positioning of the drum of active principle and of the various other components, as well as problems of manoeuvrability of the whole system.

At the present time, jointed feelers on vertical sprung shafts are located at the ends of the boom formed by the various latticed and mutually articulated arms, and in case of interference with obstacles these feelers activate safety procedures to prevent damage to the structure. However, these protective devices are ineffective if fixed obstacles touch the spray boom directly up-line from the feelers.

Finally, it should be noted that in recent practice the boom has been provided with one or two longitudinal tubular sleeves of tear-proof plasticized fabric, each of which is closed at one end and has the other end connected to a high-capacity fan or other suitable means. The sleeve or sleeves are provided over the whole length with rows of equidistant downward-facing holes, through which the pressurized air generated by the aforesaid fan exits, to create one or two protective air curtains, at the sides of the spray nozzles, in order to eliminate the drift effect in case of wind. Although this system has significantly improved both the uniformity of spraying of the product and the consumption of active principle, it is not effective if the wind is orthogonal to the direction of travel, since in this case the wind blows along the channel formed by the air barrier or barriers. These known systems require the use of very powerful fans or turbines because of the large number of holes provided along the whole length of the sleeves. Such a system is known from WO- A-00/ 42840,

FR-2 541 912 discloses a spray boom that includes at least two telescopically-linked lateral boom elements; motor means for causing the telescopic movement between these two elements; spray nozzles carried by each of them; means for supplying fluid to be sprayed, suitable for each series of nozzles carried by the said boom elements, the supply means of at least the nozzle series carried by the movable boom element being, in part, movable or deformable in order to be shaped so as to correspond to the relative longitudinal position of the said elements.

The object of the invention is to overcome all of these and other drawbacks of the known art with the following proposed solution and according to the features of claim 1. Sections with channelled profiles, slidable telescopically into each other, are used in place of the latticed arms, in such a way as to form very light structures which are not subject to the torsional moments of the known arms at the time of extension and retraction, and whose overall dimensions are significantly limited when in the retracted position. The telescopic sections are preferably formed from tubular sections with a profile in the form of an inverted U, and the pipes with the spray nozzles are positioned longitudinally in the channels on the undersides of these sections. The channels of the movable sections have a depth greater than that of the channels of the fixed sections, and the pipes with the nozzles are positioned in these deeper channels, in such a way that they can be raised during the retraction and extension of the sections, and lowered on completion of the extension of the sections, in such a way as to become aligned and coplanar with the pipes of the fixed sections.

The actuators used for the various pitching and vertical oscillation movements of the booms are designed in such a way as to detect any resistance to the normal advance of the whole equipment, in such a way that the telescopic booms themselves act as feelers, to activate safety procedures when an obstacle touches them at any point of their extension.

If necessary, the telescopic sections forming the booms can be used to channel pressurized air to carry out "air-assisted" spraying processes, preferably by creating air curtains substantially surrounding the various nozzles, which are effective even in cases where the wind is orthogonal to the direction of advance of the spray boom, and which require a smaller air flow than that required by inflatable sleeve systems of the known type.

These and other characteristics of the invention, and the advantages derived therefrom, will be made clearer by the following description of a preferred embodiment, illustrated purely by way of example, and without restrictive intent, in the figures on the attached sheets of drawings, in which:
- Fig. 1 shows a lateral view, in longitudinal section, of a spray boom with telescopic sections according to the invention;
- Fig. 2 is a plan view from below of the boom of Figure 1;
- Fig. 3 shows other details of the boom of Figure 1, in a transverse section taken through the line III-III.

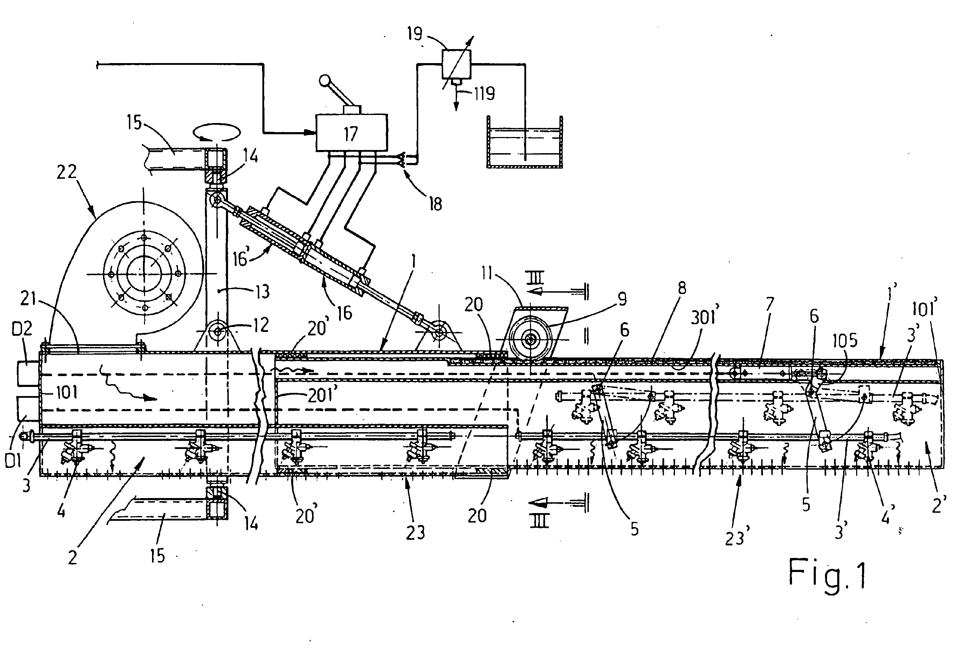

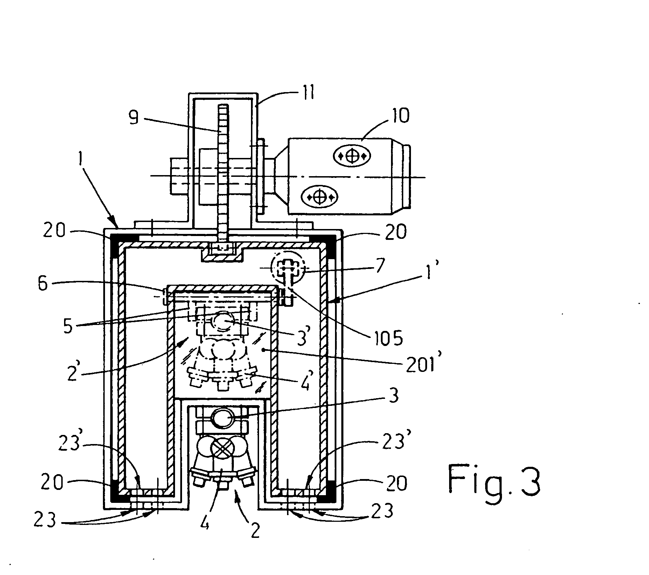

The figures show that one of the components of a spray boom positioned, with the possibility of reducing the overall dimensions, at the side of the means of transport, consists of at least two tubular sections 1 and 1' of any material suitable for the purpose, which when seen in section as in Figure 3 have a profile in the shape of an inverted U, with lower, longitudinal and median channels 2, 2' in each of which the pipes 3 and 3' are housed longitudinally with the nozzles 4, 4' which spray the treatment liquid downwards. Figures 1 and 3 show that the pipe 3 is fixed in the channel 2 of the fixed section 1, while the pipe 3' is positioned in such a way that it can be lowered and raised in the channel 2' of the movable section 1', the latter channel having a height or depth greater than that of the channel 1 of the fixed section, so that, when the movable section 1' is moved longitudinally, the pipe 3' with the nozzles 4' is in the raised position, as illustrated in broken lines, in such a way that it is positioned above the channel 2 carrying the fixed pipe 3, while when the section 1' is fully extended the corresponding pipe 3' can be lowered and aligned so that it is coplanar with the pipe 3, as illustrated in Figure 1 in solid lines. To permit this upward and downward movement of the pipe 3', the pipe is, for example, connected to levers 5 pivoted at 6 to the section 1', thus forming an articulated parallelogram, at least one of these levers being provided with an extension 105 which projects beyond the pivot 6, for connection to an actuator 7 fixed inside the section 1', which raises or lowers the pipe 3' through the necessary distance.

Rotary distributors of a known type D1, D2 can be provided on the end of the fixed section 1 which is on the left-hand side of Figure 1, to control the tension of the supply tubes of the pipe 3' and of the cylinder 7, the whole arrangement being easily understood and implemented by persons skilled in the art.

The movable section 1' slides longitudinally in the fixed section 1 with the interposition of pads 20 and 20' of suitable material, the pads 20 being fixed inside the right-hand end of section 1, while the pads 20' are fixed outside the left-hand end of section 1'. The longitudinal movement of extension and retraction of the section 1' can be obtained, for example, by means of a chain or rack 8 fixed in a median and upper longitudinal housing 301' of the section 1', which also helps to stiffen this section, this chain or rack engaging with the pinion 9 of a motor or geared motor 10 of any suitable type, flange-fitted to a support 11 fixed on the farthest projecting end of the section 1. Clearly, other means can be used for the longitudinal movement of the section 1', without departure from the scope of the present invention.

In the present example, it is assumed that the section 1 is supported with the possibility of oscillation for pitching movements on a horizontal and transverse shaft 12 carried by a structure 13 which in turn is supported, with the possibility of slewing on a vertical shaft 14, by a support structure 15. Actuators are provided for moving the telescopic boom about the aforesaid shafts 12 and 14. In a preferred embodiment of the invention, each of these actuators can advantageously consist of a pair of cylinders 16, 16' with opposing rods, fixed together by their bases, which are controlled through a distribution box 17 to position the boom in the operating position or in the rest position, and which are such that, when the said boom is in the extended horizontal operating position, the said cylinders can allow the boom to make additional upward or downward pitching movements, or forward or backward slewing movements. At least one safety valve 19 is connected by a branch to the opposing pressure chambers of the cylinders 16 and 16', through one-way valves 18 for example, this safety valve coming into operation automatically and discharging the oil from either one of the two cylinders whenever the boom in question is touched at any point by an obstacle which tends to make it pitch or slew. The safety valve 19 is provided with an outlet 119 of any type, including the electrical type, which in case of intervention initiates safety procedures, such as the automatic stop of the spraying machine, including the spraying of the liquid by the nozzles 4, 4', in such a way as to prevent dangerous concentrations of the treatment liquid on the ground.

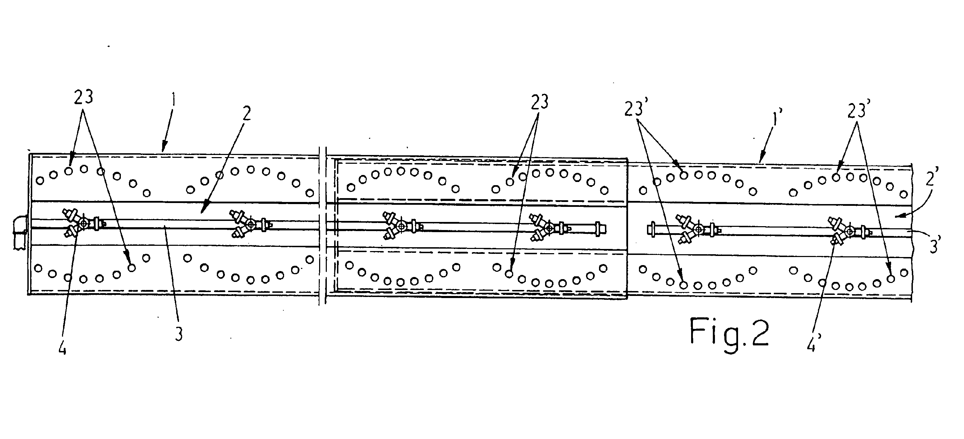

The spray boom according to the invention is also highly suitable for executing spraying treatments of the "air-assisted" type, since it can use the tubular sections 1, 1' as natural channels for guiding pressurized air. For this purpose, the free ends 101 and 101' of the sections 1 and 1' are closed, the end of the channel 2' of the movable section 1' is closed in the part 201' which reaches the channel 2 of the fixed section 1, and an annular sealing means is provided at the position of the pads 20' and also bears on the lower edge of the said wall 201', in such a way as to provide an annular connection with the best possible seal between the inverted-U chambers of section 1 and section 1'. On the free end of the fixed section 1 there is an aperture 21 on which it is possible to flange-fit, directly or with the interposition of a flexible sleeve, a pressurized air generator 22 having suitable characteristics for the purpose, driven by a motor of any suitable type, which introduces air at correct values of pressure and flow rate into the inner chambers of the sections 1, 1'. The figures, and in particular Figure 2, show how at least the end walls of the sections 1, 1' are provided, in the area of the nozzles 4, 4' and around the nozzles, with rings, of ellipsoid shape for example, of downward facing holes 23, 23', through which the pressurized air produced by the generator 22 flows out, in such a way as to provide an effective curtain to prevent drift due to wind, which is also effective against winds blowing orthogonally with respect to the direction of travel of the boom. In the present example, the holes 23, 23' are interrupted in the area of the channels 2, 2', but it should be understood that, in a variant embodiment, they can also be present in the upper walls of these channels, in such a way as to form true rings of holes, completely surrounding each nozzle. The sum of the cross sections of all the rings of holes 23, 23' provided in the sections 1, 1' of a boom according to the invention is markedly lower than that of the holes provided over the whole length of the flexible sleeves of known systems, and therefore the invention permits the use of a generator 22 of smaller capacity. The sum of the cross sections of all the holes 23, 23' in the telescopic boom 1, 1' is equal to or preferably less than the area of the aperture 21, in such a way that the air produced by the generator 22 can reach even the holes which are most remote from the said generator with correct values of pressure and flow rate.

## Claims

1. Boom for spraying active principles in agriculture, of the transported, towed or self-propelling type, comprising arms or sections (1, 1') having a suitable channelled profile, made from a suitable material resistant to bending and torsional movements, slidable telescopically into each other under the action of suitable guide and drive means, in such a way as to form light structures which are not subject to torsional moments of the arms in the extension and retraction stages, and which have limited overall dimensions when in the retracted position, the pipes (3, 3') with the spray nozzles (4, 4') being fixed in a suitable way to the said sections, **characterized in that** the tubular sections (1, 1') of which the boom consists are closed for use as channels for conveying pressurized air, said boom being suitable for executing spraying treatments of the "air-assisted" type.

2. Boom according to Claim 1, in which the channelled sections (1, 1') which form it are made from tubular section.

3. Boom according to Claim 2, in which the tubular sections (1, 1') which form it have a profile in the form of an inverted U and the pipes (3, 3') with the nozzles (4, 4') are positioned in the longitudinal channels (2, 2') on the underside of the said sections.

4. Boom according to Claim 3, in which the fixed section (1) has the corresponding pipe (3) with the nozzles (4) fixed longitudinally in its channel (2), while the corresponding pipe (3') with the nozzles (4') is housed in the channel (2') of the movable section (1') in such a way that it can be lowered and raised in this channel (2), which has a height or depth greater than that of the channel of the fixed section (1), so that, when the movable section (1') is moved longitudinally, the corresponding pipe (3') with the nozzles (4') is in the raised position, in such a way that it is positioned above the channel (2) with the fixed pipe (3), while, when the movable section (1') is fully extended, the corresponding pipe (3') can be lowered and aligned to be coplanar with that (3) of the fixed section (1).

5. Boom according to Claim 4, in which the pipe (3') with the nozzles (4') of the movable section (1') is connected to levers (5) pivoted (6) on the said section (1') to form an articulated parallelogram, and at least one of these levers is provided with an extension (105) which projects beyond the pivot, for connection to an actuator (7) fixed inside this section (1'), which raises or lowers the said pipe (3').

6. Boom according to any one or more of the preceding claims, in which rotary distributors (D1, D2) can be provided on the free end of the fixed section (1), to control the supply tubes of the pipe (3') and of the actuator cylinder (7), mounted in the movable section (1').

7. Boom according to any one or more of the preceding claims, in which the movable section (1') slides longitudinally in the fixed section (1) with the interposition of pads (20, 20') of suitable material, some of which are fixed inside the end of the fixed section which interacts with the movable section (1'), while some are fixed outside the end of the movable section (1') which slides in the fixed section.

8. Boom according to any one or more of the preceding claims, in which a suitable servo control system is provided to make the movable section (1') slide longitudinally in the fixed section which forms the said boom, to bring the latter to the condition of maximum extension, in other words the operating condition, or to the condition of maximum retraction, in other words the rest condition.

9. Boom according to Claim 8, in which the movable section (1') is provided with a longitudinal recess (301'), located for example in a median position, in which is fixed a chain or rack (8) which engages with a pinion (9) of a motor or geared motor (10) of any suitable type, flange-fitted to a support (11) fixed on the farthest projecting end of the fixed section (1).

10. Boom according to any one or more of the preceding claims, in which the fixed section (1) is supported with the possibility of oscillation on a horizontal and transverse shaft (12) for the pitching movements, and this shaft is carried by a structure (13) which in turn is supported by a support structure (15), with the possibility of slewing on a vertical shaft (14), so that the boom can be positioned in the operating position, transverse with respect to the direction of advance over the ground, or in the rest position, parallel to the direction of advance, suitable actuators being provided for producing the said pitching and slewing movements independently.

11. Boom according to Claim 10, in which each of the said actuators for moving the said boom consists of a pair of cylinders (16, 16') with opposing rods, fixed together by their bases, which are controlled through a distribution box (17) and which are such that, when the said boom is in the extended horizontal operating position, the said cylinders can allow the boom to make additional upward or downward pitching movements, or vertical forward or backward oscillatory movements, at least one safety valve (19) being connected by a branch to the opposing pressure chambers of the said cylinders (16, 16'), through one-way valves (18) for example, this safety valve coming into operation automatically and discharging the oil from either one of the two cylinders if the boom in question is touched at any point by an obstacle which tends to make it pitch or slew.

12. Boom according to Claim 11, in which the safety valve (19) is provided with an outlet (119) of any type, including the electrical type, which in case of intervention initiates safety procedures, such as the automatic stop of the spraying machine.

13. Boom according to Claim 1, in which the free ends (101) and (101') of the sections (1, 1') of which it consists are closed, and the end of the channel (2') of the movable section (1') is closed in the part (201') which reaches the channel (2) of the fixed section (1), while in the area of the pads (20') of the movable section (1') an annular sealing means is provided and also bears on the lower edge of the said wall (201'), in such a way as to provide a sealed connection between the inverted-U inner chambers of the said sections (1, 1').

14. Boom according to Claim 13, in which on the free end of the fixed section (1) there is an aperture (21) on which it is possible to flange-fit, directly or with the interposition of a flexible sleeve, a pressurized air generator (22), driven by a motor of any suitable type, which introduces air at correct values of pressure and flow rate into the inner chambers of the sections (1, 1') of the boom.

15. Boom according to Claim 14, in which at least the end walls of the sections (1, 1') are provided, in the area of the nozzles (4, 4') and around the nozzles, with rings of downward facing holes (23, 23'), through which the pressurized air produced by the generator (22) flows out, in such a way as to provide a protective barrier against drift due to wind, which is also effective against winds blowing orthogonally with respect to the direction of travel of the boom.

16. Boom according to Claim 15, in which the said rings of holes (23, 23') are of ellipsoid form in plan view, and the nozzles (4, 4') are located in the centres of these rings.

17. Boom according to Claim 15, in which the said rings of holes (23, 23') are interrupted in the area of the channels (2, 2') in the undersides of the sections (1, 1') of which the said boom consists.

18. Boom according to Claim 15, in which the said rings of holes (23, 23') are also present in the upper walls of the channels (2, 2'), in such a way as to form rings of holes which surround each nozzle.

19. Boom according to Claim 15, in which the sum of the cross sections of all the lower holes (23, 23') in the telescopic sections (1, 1') of which the said boom consists is equal to, or preferably less than, the area of the inlet aperture (21) connected to the generator (22), in such a way that the air produced by this generator can reach even the most remote holes (23, 23') with correct values of pressure and flow rate.

## Patentansprüche

1. Gestänge bzw. Ausleger des Förderer-, des Schlepper- oder des selbstfahrenden Typs zum Versprühen von aktiven Substanzen in der Landwirtschaft, welches bzw. welcher Arme oder Abschnitte (1, 1') mit einem geeigneten Kanalprofil aufweist, aus einem geeigneten, gegenüber Biege- und Drehbewegungen beständigen Material hergestellt ist, unter der Wirkung geeigneter Führungs- und Antriebmittel teleskopartig ineinanderschiebbar ist, so daß leichte Strukturen gebildet werden, die in den ausgefahrenen und eingefahrenen Zuständen keinen Drehbewegungen der Arme unterworfen sind und die in eingefahrener Position begrenzte Gesamtabmessungen haben, wobei die Rohre (3, 3') mit den Sprühdüsen (4, 4') in geeigneter Weise an den Abschnitten befestigt sind, **dadurch gekennzeichnet, daß** die rohrförmigen Abschnitte (1, 1'), aus denen das Gestänge besteht, geschlossen sind für eine Verwendung als Kanäle zum Befördern von Druckluft, wobei das Gestänge geeignet ist, um Sprühbehandlungen des "Luft-unterstützten" Typs durchzuführen.

2. Gestänge nach Anspruch 1, wobei die dieses bildenden kanalförmigen Abschnitte (1, 1') aus einem rohrförmigen Abschnitt gebildet sind.

3. Gestänge nach Anspruch 2, wobei die dieses bildenden rohrförmigen Abschnitte (1, 1') ein Profil in Form eines umgedrehten U haben und die Rohre (3, 3') mit den Düsen (4, 4') in den in Längsrichtung verlaufenden Kanälen (2, 2') an der Unterseite der Abschnitte angeordnet sind.

4. Gestänge nach Anspruch 3, wobei in dem fixierten Abschnitt (1) das entsprechende Rohr (3) mit den Düsen (4) in Längsrichtung in seinem Kanal (2) befestigt ist, während das entsprechende Rohr (3') mit den Düsen (4') in dem Kanal (2) des beweglichen Abschnitts (1') aufgenommen ist, so daß es in diesem Kanal (2), der eine Höhe oder Tiefe hat, die größer ist als diejenigen des Kanals des fixierten Abschnitts (1), abgesenkt und angehoben werden kann, so daß, wenn der bewegliche Abschnitt (1') in Längsrichtung bewegt wird, das entsprechende Rohr (3') mit den Düsen (4') in der angehobenen Position ist, so daß es oberhalb des Kanals (2) mit dem fixierten Rohr (3) angeordnet ist, während, wenn der bewegliche Abschnitt (1') vollständig ausgefahren ist, das entsprechende Rohr (3') abgesenkt und so ausgerichtet werden kann, daß es mit demjenigen (3) des fixierten Abschnitts (1) in der gleichen Ebene liegt.

5. Gestänge nach Anspruch 4, wobei das Rohr (3') mit den Düsen (4') des beweglichen Abschnitts (1') mit Hebeln (5) verbunden ist, die an dem Abschnitt (1') drehbar gelagert (6) sind, so daß sie ein Gelenkparallelogramm bilden, und wenigstens einer dieser Hebel mit einer Verlängerung (105) versehen ist, die über den Drehpunkt bzw. das Gelenk hinaus vorspringt für die Verbindung mit einem Betätiger (7), der innerhalb dieses Abschnitts (1') befestigt ist und das Rohr (3') anhebt oder absenkt.

6. Gestänge nach einem oder mehreren der vorangegangenen Ansprüche, wobei Rotationsverteiler (D1, D2) an dem freien Ende des fixierten Abschnitts (1) vorgesehen sein können, um die Versorgungsleitungen des Rohrs (3') und des Betätigungszylinders (7), der in dem beweglichen Abschnitt (1') montiert ist, zu steuern.

7. Gestänge nach einem oder mehreren der vorangegangenen Ansprüche, wobei der bewegliche Abschnitt (1') in Längsrichtung in dem fixierten Abschnitt (1) gleitet und Anschlagpuffer (20, 20') aus einem geeigneten Material dazwischen angeordnet sind, von denen einige innerhalb des Endes des fixierten Abschnitts befestigt sind, welcher mit dem beweglichen Abschnitt (1') zusammenwirkt, während einige außerhalb des Endes des beweglichen Abschnitts (1') angeordnet sind, welcher in dem fixierten Abschnitt gleitet.

8. Gestänge nach einem oder mehreren der vorangegangenen Ansprüche, wobei ein geeignetes Servosteuersystem vorgesehen ist, um zu bewirken, daß der bewegliche Abschnitt (1') in Längsrichtung in dem fixierten Abschnitt gleitet, welcher das Gestänge bildet, um dieses in den maximal ausgefahrenen Zustand, das heißt in den Betriebszustand, oder in den maximal eingefahrenen Zustand, das heißt in den Ruhezustand, zu bringen.

9. Gestänge nach Anspruch 8, wobei der bewegliche Abschnitt (1') mit einer in Längsrichtung verlaufenden Ausnehmung (301') versehen ist, die beispielsweise in einer mittleren Position liegt, an welcher eine Kette oder eine Zahnstange (8) befestigt ist, die mit einem Ritzel (9) eines Motors oder eines Getriebemotors (10) eines beliebigen geeigneten Typs in Eingriff tritt, der an ein Auflager bzw. einen Träger (11) angeflanscht ist, welches bzw. welcher an dem am weitesten entfernt vorspringenden Ende des fixierten Abschnitts (1) befestigt ist.

10. Gestänge nach einem oder mehreren der vorangegangenen Ansprüche, wobei der fixierte Abschnitt (1) mit der Möglichkeit einer Auslenkung bzw. Schwingung an einer horizontalen und schrägen Welle (12) für Kippbewegungen gehaltert ist und diese Welle von einer Struktur (13) getragen wird, die wiederum durch eine Stützstruktur (15) gestützt wird mit der Möglichkeit eines Verschwenkens um eine vertikale Welle (14), so daß das Gestänge in die Betriebsposition, die in Bezug auf die Vorwärtsbewegung über den Boden schräg ist, oder in die Ruheposition, die zur Richtung der Vorwärtsbewegung parallel ist, gebracht werden kann und geeignete Betätiger vorgesehen sind, um die Kipp- und Schwenkbewegungen unabhängig voneinander zu erzeugen.

11. Gestänge nach Anspruch 10, wobei jeder der Betätiger zum Bewegen des Gestänges aus einem Paar von Zylindern (16, 16') mit einander gegenüberliegenden Stangen besteht, die an ihren Grundflächen aneinander befestigt sind, die durch einen Verteilerkasten (17) gesteuert werden und derart sind, daß, wenn das Gestänge sich in der ausgefahrenen horizontalen Betriebsposition befindet, die Zylinder zusätzliche nach oben oder nach unten gerichtete Kippbewegungen oder vertikale, nach vorne oder nach hinten gerichtete Schwingbewegungen des Gestänges ermöglichen können, wenigstens ein Sicherheitsventil (19) über eine Verzweigung an die einander gegenüberliegenden Druckkammern der Zylinder (16, 16') beispielsweise mittels Einwegventilen (18) angeschlossen sein kann, wobei das Sicherheitsventil automatisch in Gang gesetzt wird und das Öl aus einem der beiden Zylinder ausstößt, wenn das betreffende Gestänge an irgendeinem Punkt mit einem Hindernis in Berührung kommt, welches es zum Kippen oder Schwenken bringt.

12. Gestänge nach Anspruch 11, wobei das Sicherheitsventil (19) mit einem Auslaß (119) eines beliebigen Typs, einschließlich des elektrischen Typs, versehen ist, welcher im Falle eines Eingreifens Sicherheitsmaßnahmen, wie das automatische Stoppen der Sprühmaschine, startet.

13. Gestänge nach Anspruch 1, wobei die freien Enden (101) und (101') der dieses bildenden Abschnitte (1, 1') geschlossen sind und das Ende des Kanals (2') des beweglichen Abschnitts (1') in dem Abschnitt (201'), welcher den Kanal (2) des fixierten Abschnitts (1) erreicht, geschlossen ist, während in dem Bereich der Anschlagpuffer (20') des beweglichen Abschnitts (1') ein ringförmiges Dichtungsmittel vorgesehen ist und auch auf der unteren Kante der Wand (201') aufliegt, so daß eine abgedichtete Verbindung zwischen den inneren Kammern der Abschnitte (1, 1') in der Form eines umgedrehten U bereitgestellt wird.

14. Gestänge nach Anspruch 13, wobei sich an dem freien Ende des fixierten Abschnitts (1) eine Öffnung (21) befindet, an welcher direkt oder mit einer dazwischen angeordneten flexiblen Hülse ein Druckluftgenerator (22) angeflanscht werden kann, der durch einen Motor irgendeines geeigneten Typs betrieben wird und Luft mit korrekten Druck- und Fließgeschwindigkeitswerten in die inneren Kammern der Abschnitte (1, 1') des Gestänges einbringt.

15. Gestänge nach Anspruch 14, wobei zumindest die Endwände der Abschnitte (1, 1') in dem Bereich der Düsen (4, 4') und um die Düsen herum mit Ringen von nach unten weisenden Löchern (23, 23') versehen sind, durch welche die von dem Generator (22) erzeugte Druckluft ausströmt, so daß eine Schutzbarriere gegen ein Abdriften aufgrund von Wind bereitgestellt wird, die auch gegen Winde wirksam ist, die in einer zur Bewegungsrichtung des Gestänges orthogonalen Richtung wehen.

16. Gestänge nach Anspruch 15, wobei die Ringlöcher (23, 23') in der Draufsicht eine elliptische Form haben und die Düsen (4, 4') in der Mitte dieser Ringe liegen.

17. Gestänge nach Anspruch 15, wobei die Ringlöcher (23, 23') im Bereich der Kanäle (2, 2') in der Unterseite der Abschnitte (1, 1'), aus welchen das Gestänge besteht, unterbrochen sind.

18. Gestänge nach Anspruch 15, wobei die Ringlöcher (23, 23') auch in den oberen Wänden der Kanäle (2, 2') vorliegen, so daß Ringlöcher gebildet werden, die jede Düse umgeben.

19. Gestänge nach Anspruch 15, wobei die Summe der Querschnitte aller unteren Löcher (23, 23') in den das Gestänge bildenden Teleskopabschnitten (1, 1') gleich der Fläche der mit dem Generator (22) verbundenen Einlaßöffnung (21) oder vorzugsweise kleiner ist, so daß die durch diesen Generator erzeugte Luft selbst die am weitesten entfernt liegenden Löcher (23, 23') mit korrekten Druck- und Fließgeschwindigkeitswerten erreichen kann.

## Revendications

1. Rampe de pulvérisation de principes actifs en agriculture du type transporté, tracté ou à auto propulsion et comprenant des bras ou sections (1, 1') ayant un profil approprié en canal, en un matériau approprié résistant au mouvements de flexion et de torsion, pouvant coulisser télescopiquement l'un dans l'autre sous l'action de moyens appropriés de guidage et d'entraînement de façon à former des structures légères qui ne sont pas soumises à des couples de torsion des bras dans les étapes de déploiement et de retrait et qui ont des dimensions globales limitées en la position rétractée, les conduits (3, 3') étant avec les buses (4, 4') de pulvérisation fixés d'une façon convenable auxdites sections, **caractérisée en ce que** les sections (1, 1') tubulaires dont la rampe est constituée sont fermées pour être utilisées en tant que canaux véhiculant de l'air comprimé, la rampe convenant pour effectuer des traitements de pulvérisation du type à « assistance pneumatique ».

2. Rampe suivant la revendication 1, dans laquelle les sections (1, 1') en canaux qui la forment sont faites d'une section tubulaire.

3. Rampe suivant la revendication 2, dans laquelle les sections (1, 1') tubulaires qui la forment ont un profil sous la forme d'un U inversé et les conduits (3, 3') sont avec les buses (4, 4') positionnés dans les canaux (2, 2') longitudinaux sur le côté inférieur desdites sections.

4. Rampe suivant la revendication 3, dans laquelle la section (1) fixe a le conduit (3) correspondant ayant les buses (4) fixées longitudinalement dans son canal (2), tandis que le conduit (3') correspondant ayant les buses (4') est logé dans le canaux (2') de la section (1') mobile de façon à ce qu'il puisse être abaissé et soulevé dans ce canal (2), qui a une hauteur ou une profondeur plus grande que celle du canal de la section (1) fixe de sorte que, lorsque la section (1') mobile est déplacée longitudinalement, le conduit (3') correspondant ayant les buses (4') est dans la position soulevée de telle façon qu'il est positionné au dessus du canal (2) ayant le conduit (3) fixe, tandis que, lorsque la section (1') mobile est déployée complètement, le conduit (3') correspondant peut être rabaissé et aligné de manière à être coplanaire avec celui (3) de la section (1) fixe.

5. Rampe suivant la revendication 4, dans laquelle le conduit (3') ayant les buses (4') de la section (1') mobile est relié à des leviers (5) articulés sur ladite section (1') pour former un parallélogramme articulé et au moins l'un de ces leviers est muni d'un prolongement (105) qui va au-delà du pivot en vu d'être relié à un actionneur (7) fixé à l'intérieur de cette section (1') et soulevant ou abaissant le conduit (3').

6. Rampe suivant l'une quelconque ou plusieurs des revendications précédentes, dans laquelle des distributeurs (D1, D2) tournants peuvent être prévus sur l'extrémité libre de la section (1) fixe pour commander les tubes d'alimentation du conduit (3') et du cylindre (7) de l'actionneur monté dans la section (1') mobile.

7. Rampe suivant l'une quelconque ou plusieurs des revendications précédentes, dans laquelle la section (1') mobile coulisse longitudinalement dans la section (1) fixe avec l'interposition de tampons (20, 20') en un matériau approprié, certains d'entre eux étant fixés à l'intérieur de l'extrémité de la section fixe qui interagit avec la section (1') mobile, tandis que d'autres sont fixés à l'extérieur de l'extrémité de la section (1') mobile qui coulisse dans la section fixe.

8. Rampe suivant l'une quelconque ou plusieurs des revendications précédentes, dans laquelle un système approprié de servocommande est prévu pour faire que la section (1') mobile coulisse longitudinalement dans la section fixe qui forme la rampe pour, amener cette dernière dans l'état de déploiement maximum, en d'autres termes dans l'état opératoire, ou dans l'état de retrait maximum, en d'autres termes dans l'état de repos.

9. Rampe suivant la revendication 8, dans laquelle la section (1') mobile est munie d'un chambrage (301') longitudinal placé par exemple en une position médiane, dans lequel est fixée une chaîne ou une crémaillère (8) qui engrène dans un pignon (9) d'un moteur ou d'un motoréducteur (10) d'un type approprié, bridé sur un support (11) fixé sur l'extrémité faisant saillie le plus loin de la section (1) fixe.

10. Rampe suivant l'une quelconque ou plusieurs des revendications précédentes, dans laquelle la section (1) fixe est supportée avec possibilité d'oscillation sur un arbre (12) horizontal et transversal pour les mouvements de tangage, et cet arbre est porté par une structure (13) qui est supportée à son tour par une structure (15) de support avec la possibilité de pivotement sur un arbre (14) vertical de sorte que la rampe peut être positionnée, dans la position de fonctionnement, transversalement à la direction d'avancement sur le sol ou, dans la position de repos, parallèlement à la direction de l'avancement, des actionneurs appropriés étant prévus pour produire les mouvements de tangage et de pivotement indépendamment.

11. Rampe suivant la revendication 10, dans laquelle chacun des actionneurs pour déplacer la rampe consiste en une paire de vérins (16, 16') à tiges opposées, fixés ensemble par leur base, qui sont commandés par une boîte (17) de distribution et qui sont tels que, lorsque la rampe est dans la position de fonctionnement horizontale déployée, les vérins peuvent permettre à la rampe de faire des mouvements supplémentaires de tangage vers le haut ou vers le bas, ou des mouvements oscillants vertical vers l'avant ou vers l'arrière au moins une soupape (19) de sécurité communiquant par une branche avec les chambres de pression opposées des vérins (16, 16') par des vannes (18) à une voie par exemple, cette soupape de sécurité venant en fonctionnement automatiquement et guidant l'huile de l'un des deux vérins si la rampe en question est touchée en un point quelconque par un obstacle qui tend à la faire tanguer ou pivoter.

12. Rampe suivant la revendication 11, dans laquelle la soupape (19) de sécurité est munie d'une sortie (119) d'un type quelconque, y compris du type électrique, qui, dans le cas d'une intervention, lance des procédures de sécurité, telles que l'arrêt automatique de la machine de pulvérisation.

13. Rampe suivant la revendication 1, dans laquelle les extrémités (101) et (101') libres des sections (1, 1'), dont elle est constituée, sont fermées et l'extrémité du canal (2') de la section (1') mobile est fermée dans la partie (201') qui atteint le canal (2) de la section (1) fixe, tandis que dans la zone des tampons (20') de la section (1') mobile, un moyen annulaire d'étanchéité est prévu et porte aussi sur le bord inférieur de la paroi (201') de façon à ménager une liaison rendue étanche entre les chambres intérieures en U inversé des dites sections (1, 1').

14. Rampe suivant la revendication 13, dans laquelle sur l'extrémité libre de la section (1) fixe, il y a une ouverture (21) sur laquelle il est possible de brider directement ou avec l'interposition d'un manchon souple, un générateur (22) d'air comprimé entraîné par un moteur de tout type convenable, qui introduit de l'air à des valeurs correctes de pression et de débit dans les chambres intérieures des sections (1, 1') de la rampe.

15. Rampe suivant la revendication 14, dans laquelle au moins les parois d'extrémité des sections (1, 1') sont munies, dans la zone des buses (4, 4') et autour des buses, d'anneaux de trous (23, 23') faisant face vers le bas et par lesquels sort l'air comprimé produit par le générateur (22) de façon à ménager une barrière de protection à l'encontre d'une dérive dû au vent, qui est efficace aussi à l'encontre des courants d'air soufflant orthogonalement par rapport à la direction de déplacement de la rampe.

16. Rampe suivant la revendication 15, dans laquelle les anneaux de trous (23, 23') sont de forme ellipsoïde en vue en plan et les buses (4, 4') sont disposées au centre de ces anneaux.

17. Rampe suivant la revendication 15, dans laquelle les anneaux de trous (23, 23') sont interrompus dans la zone des canaux (2, 2') dans les côtés inférieurs des sections (1, 1') dont est constituée la rampe.

18. Rampe suivant la revendication 15, dans laquelle les anneaux de trous (23, 23') sont présents aussi dans les parois supérieures des canaux (2, 2'), de façon à former des anneaux de trous, qui entourent chaque buse.

19. Rampe suivant la revendication 15, dans laquelle la somme des sections transversales de tous les trous (23, 23') inférieurs dans les sections (1, 1') télescopique dont est constitué la rampe est égale ou de préférence inférieure à la superficie de l'ouverture (21) d'entrée reliée au générateur (22) de sorte que l'air produit par ce générateur peut atteindre même les trous (23, 23') les plus reculés en ayant des valeurs correctes de la pression et du débit.
